# FASCICULE DE BREVET EUROPEEN

(11) **EP 3 161 890 B1**
(45) Date de publication et mention de la délivrance du brevet: **25.07.2018**
(21) Numéro de dépôt: 15732202.5
(22) Date de dépôt: 22.06.2015
(51) Int. Cl.: H01M 8/2475

(54) **ENCEINTE DE CONFINEMENT POUR SYSTÈME DE PILE À COMBUSTIBLE, NOTAMMENT POUR UN ENGIN SOUS-MARIN**
GEHÄUSE FÜR BRENNSTOFFZELLENSYSTEM, INSBESONDERE FÜR EIN UNTERWASSERFAHRZEUG
CONTAINMENT FOR FUEL CELL SYSTEM, NOTABLY FOR AN UNDERWATER VEHICLE

(30) Priorité: 26.06.2014 FR 1401434
(43) Date de publication de la demande: 03.05.2017
(73) Titulaire: NAVAL GROUP, 75015 Paris (FR)
(72) Inventeur: ARCHER, Pascal, F-44640 Le Pellerin (FR); MELOT, Vincent, F-44360 Cordemais (FR)
(74) Mandataire: Lavoix
(86) Numéro de dépôt international: PCT/EP2015/063939
(87) Numéro de publication internationale: WO 2015/197531

(56) Documents cités:
- WO-A1-2012/130406
- JP-A- H11 329 515
- US-A1- 2006 172 187
- US-A1- 2011 111 272

## Description

La présente invention concerne une enceinte de confinement pour un système de pile à combustible, notamment pour un engin sous-marin, comportant des moyens de mise en circulation d'un flux de gaz, notamment de ventilation de ladite enceinte, entre une bouche d'injection située en partie basse de l'enceinte et une bouche d'extraction située en partie haute de l'enceinte.

Dans la suite de la description le terme « pile » sera utilisé en abrégé pour désigner l'ensemble du système de pile.

Plus particulièrement cette enceinte trouve des applications dans des systèmes de production d'énergie embarqués à bord des engins sous-marins, tels que les sous-marins proprement dits.

D'une façon générale ce type de systèmes de production d'énergie peut être englobé dans ce qui est communément appelé les systèmes de propulsion indépendants de l'air, également connus sous le nom de systèmes AIP.

Cependant, l'utilisation de telles piles à combustible dans ce type d'application nécessite de prendre un certain nombre de précautions.

En effet, la sécurité d'utilisation de ces piles, notamment en raison des risques d'inflammation liés à la présence d'hydrogène, impose de confiner la pile dans une enceinte de confinement ventilée.

Une telle pile comporte un certain nombre de composants de taille variable répartis de manière non homogène dans l'enceinte.

Il a déjà été proposé dans l'état de la technique de définir des enceintes de confinement de cette nature pour ce type d'application comportant des moyens de mise en circulation d'un flux de gaz pour éviter l'accumulation de produit hautement inflammable tel que l'hydrogène, voire pour refroidir cette pile, entre une bouche d'injection située en partie basse d'un côté de l'enceinte et une bouche d'extraction située en partie haute de l'autre côté de l'enceinte. Un tel type d' enceinte comprenant plus spécifiquement des moyens de refroidissement pour un système de batteries est connu du document WO2012130406. Cependant, et en raison des répartitions évoquées précédemment, il se trouve que des zones de l'enceinte peuvent ne pas être traversées par ce flux de gaz, ce qui peut poser des problèmes de concentration dangereuse de produits hautement inflammables dans ces zones, voire des problèmes de refroidissement de ces zones.

Le but de l'invention est donc de résoudre ces problèmes, de sorte que toutes les zones de l'enceinte soient traversées par le flux de gaz.

A cet effet l'invention a pour objet une enceinte du type précité, dans laquelle l'une au moins des bouches est associée à des moyens de mise en circulation contrôlée du flux de gaz sur toute la section de l'enceinte et dans laquelle l'enceinte comporte des parois inférieure et supérieure associées à des moyens formant tunnel répartiteur et tunnel collecteur du flux de gaz respectivement, le tunnel répartiteur et le tunnel collecteur étant chacun délimité par une plaque perforé, placée à distance de la paroi inférieure ou supérieure correspondante de l'enceinte, chaque plaque perforée étant munie de perforations ménagées dans ladite plaque, de telle sorte que le flux de gaz injecté et extrait varie en fonction de la distance par rapport à la bouche correspondante, les perforations présentant un diamètre progressivement variable en fonction de la distance par rapport à la bouche correspondante, le diamètre des perforations de la plaque étant progressivement croissant quand la distance par rapport à la bouche correspondante augmente.

L'enceinte selon l'invention peut comprendre l'une ou plusieurs des caractéristiques suivantes, prise(s) isolément ou suivant toutes combinaisons techniquement possibles :
- les moyens de mise en circulation comportent en outre :
   - un répartiteur de gaz injecté associé à la bouche d'injection, pour répartir ce flux de gaz injecté de façon contrôlée sur toute la section basse de l'enceinte, et/ou
   - un collecteur de gaz extrait associé à la bouche d'extraction, pour extraire ce flux de gaz de façon contrôlée sur toute la section haute de l'enceinte ;
- elle présente une forme générale parallélépipédique et comporte des parois latérales dans lesquelles sont ménagées la bouche d'injection et la bouche d'extraction de gaz ;
- elle comporte des moyens d'aspiration associés à la bouche d'extraction ;
- les moyens d'aspiration comprennent un moto ventilateur électrique aspirant.

L'invention sera mieux comprise à la lecture de la description qui va suivre, donnée uniquement à titre d'exemple, et faite en se référant aux dessins annexés, sur lesquels :
- la figure 1 représente un schéma synoptique illustrant la structure d'une enceinte de confinement pour un système de pile à combustible de l'état de la technique,
- la figure 2 représente une vue analogue à celle de la figure 1 illustrant la structure d'une enceinte de confinement selon l'invention, et
- la figure 3 représente une vue de dessus d'une variante de réalisation d'une plaque perforée entrant dans la constitution d'une enceinte selon l'invention.

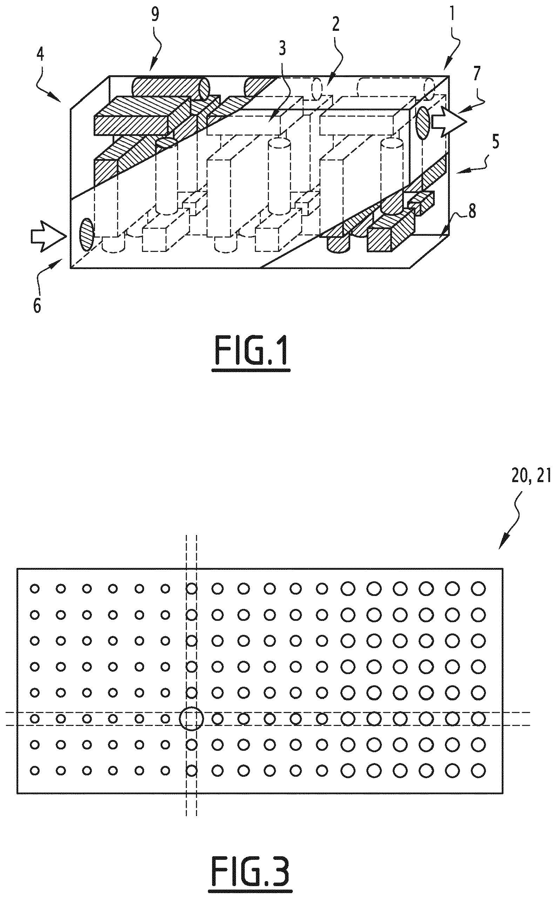

Une enceinte 1 de confinement pour un système de pile à combustible 2 est illustrée sur la figure 1.

Dans la suite de la description le terme « pile » sera utilisé en abrégé pour désigner l'ensemble du système de pile.

Cette pile peut notamment être utilisée dans des applications navales, elle peut par exemple être embarquée à bord d'un engin sous-marin, tel qu'un sous-marin proprement dit, pour assurer sa propulsion ou fournir l'électricité nécessaire à la vie à bord.

Comme cela a été indiqué précédemment, des composants 3 entrant dans la constitution d'une ou plusieurs piles à combustible 2 peuvent être répartis dans l'enceinte, de manière non homogène.

L'enceinte 1 présente une forme générale parallélépipédique et comporte alors, par exemple, des parois latérales 4, 5 dans lesquelles sont ménagées des bouches d'injection 6 et d'extraction 7 de gaz permettant de faire circuler un flux de gaz dans cette enceinte et pouvant éventuellement participer au refroidissement de la pile.

Sur cette figure 1, la bouche d'injection 6 est située en partie basse d'un côté de l'enceinte 1 et la bouche d'extraction 7 est située en partie haute de l'autre côté de l'enceinte 1.

On conçoit alors que lorsque le flux de gaz est mis en circulation entre la bouche d'injection 6 et la bouche d'extraction 7, celui-ci permet de ventiler plus ou moins bien l'intérieur de l'enceinte 1 et donc les composants 3 de la pile à combustible 2.

Cependant, et comme cela est illustré sur la figure 1, des zones de cette enceinte sont mal, voire pas du tout ventilées, comme par exemple la zone 8 située en bas de l'enceinte 1 à l'opposé de la bouche d'injection 6 et la zone 9 située en haut de l'enceinte 1 à l'opposé de la bouche d'extraction 7 du flux de gaz.

Comme cela est indiqué précédemment, cette situation peut présenter un certain nombre d'inconvénients, voire être dangereuse.

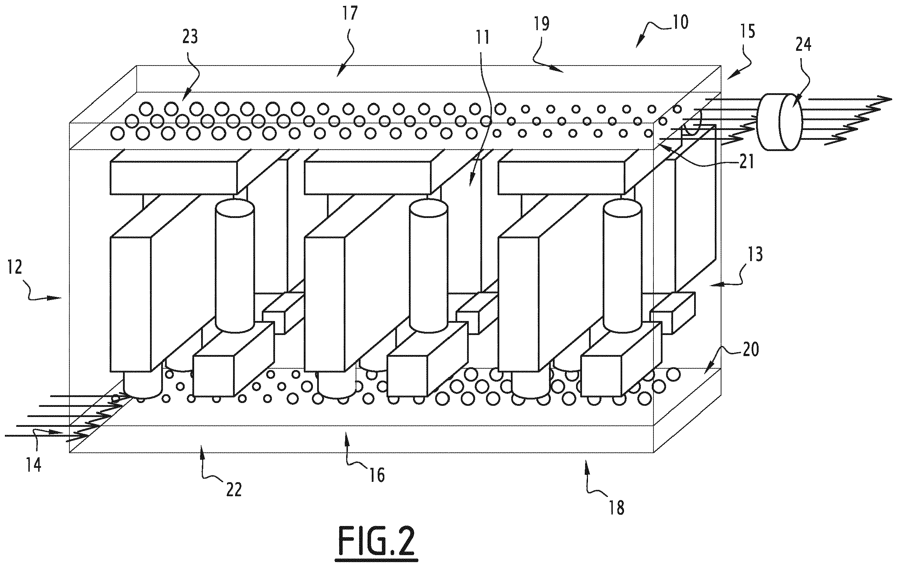

Pour résoudre ces problèmes et comme cela est illustré sur la figure 2, on utilise de façon avantageuse un répartiteur de gaz injecté et un collecteur de gaz extrait.

On a en effet représenté sur la figure 2, une enceinte 10 de confinement pour pile à combustible selon l'invention, apte à recevoir des composants 11 d'une pile à combustible.

Dans l'exemple, cette enceinte 10 présente une forme générale parallélépipédique et comporte des parois latérales 12, 13.

Bien entendu d'autres formes peuvent être envisagées pour l'enceinte 10, comme par exemple ovoïde, cylindrique ...

L'enceinte 10 comporte des bouches d'injection 14 et d'extraction 15 de gaz ménagées respectivement par exemple dans les parois latérales 12 et 13.

Pour résoudre les différents problèmes évoqués précédemment, l'enceinte 10 comporte en outre, un répartiteur 16 de gaz injecté associé à la bouche d'injection 14 pour répartir le flux de gaz injecté de façon contrôlée sur toute la section basse de l'enceinte 10 et un collecteur 17 de gaz extrait associé à la bouche d'extraction 15, pour extraire le flux de gaz de façon contrôlée sur toute la section haute de l'enceinte 10.

Ces répartiteur 16 et collecteur 17 de gaz sont respectivement délimités entre une paroi inférieure 18 et une paroi supérieure 19 de l'enceinte 10 et une plaque perforée correspondante 20, 21, délimitant avec les parois inférieure 18 et supérieure 19 de l'enceinte 10 respectivement, un tunnel répartiteur 22 et un tunnel collecteur 23, associés respectivement à la bouche d'injection 14 et à la bouche d'extraction 15 du flux de gaz.

On conçoit ainsi que les parois inférieure 18 et supérieure 19 de l'enceinte 10 sont associées à des moyens formant tunnel répartiteur 22 et tunnel collecteur 23 du flux de gaz respectivement, dont l'une des parois est formée par une plaque perforée 20, 21.

Bien entendu d'autres dispositions et modes de réalisation peuvent être envisagés.

Ainsi les bouches 14, 15 peuvent également être ménagées dans les parois inférieure et supérieure de l'enceinte 10.

Comme cela est illustré sur la figure 2, chaque plaque perforée est par exemple munie de perforations présentant un diamètre progressivement variable en fonction de la distance par rapport à la bouche correspondante.

Ainsi, par exemple le diamètre des perforations de la plaque est progressivement croissant quand la distance par rapport à la bouche correspondante augmente.

Par exemple, comme visible sur la figure 2, le diamètre des perforations de la plaque perforée 20 augmente au fur et à mesure que la distance entre les perforations et la bouche d'injection 14, augmente. A l'inverse, le diamètre des perforations de la plaque perforée 21 diminue au fur et à mesure que la distance entre celle-ci et la bouche d'extraction 15 diminue.

Il va de soi bien entendu que d'autres modes de réalisation peuvent être envisagés et que le diamètre des perforations peut être conçu d'une autre façon pour adapter la vitesse et le débit d'aspiration de gaz à la position d'éléments critiques de la pile dans l'enceinte 10.

Des formes différentes de perforations peuvent être envisagées. Dans l'exemple illustré, elles sont toutes circulaires mais des formes autres comme par exemple rectangulaires peuvent convenir. Des combinaisons de perforations de formes différentes peuvent également être envisagées.

Ainsi, comme illustré sur la figure 3, en fonction de la position d'éléments critiques dans la pile, il est possible de prévoir des perforations avec des diamètres plus importants dans certaines zones des plaques 20, 21 indépendamment de la distance entre celle-ci et la bouche 14, 15 correspondante.

En fait, on peut par exemple définir une section de circulation du flux de gaz qui varie en fonction de la distance à la bouche 14, 15 et/ou des éléments constitutifs de la pile.

Ceci est obtenu en faisant varier par exemple la section, la forme et/ou le nombre de perforations.

Il va de soi bien entendu qu'une telle enceinte 10 peut également être associée à des moyens de forçage de la circulation du flux de gaz, et notamment à des moyens d'aspiration comprenant un moto-ventilateur électrique aspirant 24, par exemple associé à la bouche d'extraction 15, comme illustré sur la figure 2.

Dans d'autres exemples de réalisation, l'enceinte 10 peut être également associée à des moyens d'alimentation comprenant un moto-ventilateur électrique soufflant, par exemple associé à la bouche d'injection 14.

Dans encore d'autres exemples de réalisation, l'enceinte 10 peut être associée à la fois à des moyens d'aspiration et d'alimentation tels que définis précédemment.

On conçoit alors qu'une telle structure avec des tunnels 22, 23 de répartition de gaz injecté et de collection de gaz extrait permet d'obtenir une conversion de flux de circulation d'horizontal à vertical, ce qui se traduit par une bonne circulation des gaz à l'intérieur de l'enceinte et permet donc de résoudre les problèmes évoqués précédemment.

Il va de soi bien entendu que d'autres modes de réalisation de cette enceinte 10 peuvent encore être envisagés.

## Revendications

1. Enceinte (10) de confinement pour système de pile à combustible, notamment pour un engin sous-marin, comportant des moyens de mise en circulation d'un flux de gaz, notamment de ventilation de ladite enceinte, entre une bouche d'injection (14) située en partie basse de l'enceinte (10) et une bouche d'extraction (15) située en partie haute de l'enceinte (10), **caractérisée en ce que** l'une au moins des bouches (14, 15) est associée à des moyens de mise en circulation contrôlée du flux de gaz sur toute la section de l'enceinte et **en ce que** l'enceinte (10) comporte des parois inférieure (18) et supérieure (19) associées à des moyens formant tunnel répartiteur (22) et tunnel collecteur (23) du flux de gaz respectivement, le tunnel répartiteur (22) et le tunnel collecteur (23) étant chacun délimité par une plaque perforée (20, 21) placée à distance de la paroi inférieure (18) ou supérieure (19) correspondante de l'enceinte (10), chaque plaque perforée (20, 21) étant munie de perforations ménagées dans ladite plaque (20, 21) de telle sorte que le flux de gaz injecté et extrait varie en fonction de la distance par rapport à la bouche (14, 15) correspondante, les perforations présentant un diamètre progressivement variable en fonction de la distance par rapport à la bouche (14, 15) correspondante, le diamètre des perforations de la plaque étant progressivement croissant quand la distance par rapport à la bouche (14, 15) correspondante augmente.

2. Enceinte (10) selon la revendication 1, **caractérisée en ce que** les moyens de mise en circulation comportent en outre :
- un répartiteur (16) de gaz injecté associé à la bouche d'injection (14), pour répartir ce flux de gaz injecté de façon contrôlée sur toute la section basse de l'enceinte (10), et/ou
- un collecteur (17) de gaz extrait associé à la bouche d'extraction (15), pour extraire ce flux de gaz de façon contrôlée sur toute la section haute de l'enceinte (10).

3. Enceinte (10) selon la revendication 1 ou 2, **caractérisée en ce qu'**elle présente une forme générale parallélépipédique et comporte des parois latérales (12, 13) dans lesquelles sont ménagées la bouche d'injection (14) et la bouche d'extraction (15) de gaz.

4. Enceinte (10) selon l'une quelconque des revendications précédentes, **caractérisée en ce qu'**elle comporte des moyens d'aspiration associés à la bouche d'extraction (15).

5. Enceinte (10) selon la revendication 4, **caractérisée en ce que** les moyens d'aspiration comprennent un moto ventilateur électrique aspirant (24).

## Patentansprüche

1. Abgeschlossener Raum (10) für Brennstoffzellensystem, insbesondere für ein Unterwassergerät, aufweisend Mittel zum In-Zirkulation-Bringen eines Gasflusses, insbesondere zur Ventilation des besagten Raums (10), zwischen einer Einspritzöffnung (14), die im unteren Abschnitt des Raums (10) angeordnet ist, und einer Extraktionsöffnung (15), die im oberen Abschnitt des Raums (10) angeordnet ist, **dadurch gekennzeichnet, dass** wenigstens eine der Öffnungen (14, 15) assoziiert ist mit Mitteln zum In-gesteuerte-Zirkulation-Bringen des Gasflusses über den gesamten Querschnitt des Raumes und dass der Raum (10) aufweist eine untere (18) und eine obere (19) Wand, die assoziiert sind mit Mitteln, die respektive einen Verteilertunnel (22) und einen Sammlertunnel (23) des Gasflusses bilden, wobei der Verteilertunnel (22) und der Sammlertunnel (23) jeweils durch eine perforierte Platte (20, 21) begrenzt sind, die im Abstand von der unteren (18) oder der oberen Wand (19) angeordnet ist, korrespondierend zu dem Raum (10), wobei jede perforierte Platte (20, 21) mit Perforierungen versehen ist, die in der besagten Platte (20, 21) ausgebildet sind, sodass der einspritzte und extrahierte Gasfluss variiert in Abhängigkeit von dem Abstand bezüglich der korrespondierenden Öffnung (14, 15), wobei die Perforationen einen Durchmesser haben, der progressiv variabel ist in Abhängigkeit von dem Abstand bezüglich der korrespondierenden Öffnung (14, 15), wobei der Durchmesser der Perforationen der Platte progressiv zunimmt, wenn der Abstand bezüglich der korrespondierenden Öffnung (14, 15) ansteigt.

2. Raum (10) gemäß Anspruch 1, **dadurch gekennzeichnet, dass** die Mittel zum In-Zirkulation-Bringen ferner aufweisen:
- einen Verteiler (16) von eingespritztem Gas, der mit der Einspritzöffnung (14) assoziiert ist, zum Verteilen dieses Flusses eingespritzten Gases in gesteuerter Weise über den gesamten unteren Querschnitt des Raums (10), und/oder
- einen Sammler (17) von extrahiertem Gas, der mit der Extraktionsöffnung (15) assoziiert ist, zum Extrahieren dieses Flusses von Gas in gesteuerter Weise über den gesamten oberen Querschnitt des Raums (10).

3. Raum (10) gemäß Anspruch 1 oder 2, **dadurch gekennzeichnet, dass** er eine im Allgemeinen quaderförmige Gestalt hat und Seitenwände (12, 13) aufweist, in welchen die Gas-Einspritzöffnung (14) und die Gas-Extraktionsöffnung (15) ausgebildet sind.

4. Raum (10) gemäß irgendeinem der vorhergehenden Ansprüche, **dadurch gekennzeichnet, dass** er aufweist Mittel zum Absaugen, die mit der Extraktionsöffnung (15) assoziiert sind.

5. Raum (10) gemäß Anspruch 4, **dadurch gekennzeichnet, dass** die Mittel zum Absaugen aufweisen einen elektrischen Saug-Ventilationsmotor (24).

## Claims

1. A containment enclosure (10) for a fuel cell system, in particular for an underwater vehicle, comprising gas circulation means for bringing about the circulation of a stream of gas, notably for the ventilation of the said enclosure, between an injection opening (14) situated in the lower part of the enclosure (10) and an extraction opening (15) situated in the upper part of the enclosure (10), **characterized in that** at least one of the openings (14,15) is associated with the controlled gas circulation means for bringing about the controlled circulation of the stream of gas across the entire section of the enclosure, and **in that** the enclosure (10) comprises a bottom wall (18) and a top wall (19) associated with means forming a distributor tunnel (22) and a collector tunnel (23) for respectively distributing and collecting the stream of gas, the distributor tunnel (22) and the collector tunnel (23) each being delimited by a perforated plate (20, 21) placed at a distance away from the corresponding bottom wall (18) or top wall (19) of the enclosure (10), each perforated plate (20, 21) being provided with perforations arranged in the said plate (20, 21), in a manner such that the stream of injected gas and extracted gas varies depending on the distance in relation to the corresponding opening (14, 15), the perforations presenting a diameter that varies progressively as a function of the distance in relation to the corresponding opening (14, 15), the diameter of the perforations of the plate being progressively increasing when the distance in relation to the corresponding opening (14, 15) increases.

2. An enclosure (10) according to claim 1, **characterized in that** the means for bringing about gas circulation comprise in addition:
- an injected gas distributor (16) associated with the injection opening (14), for distributing this stream of injected gas in a controlled fashion all over the entire lower section of the enclosure (10); and/or
- an extracted gas collector (17) associated with the extraction opening (15), for extracting this stream of gas in a controlled fashion from all over the entire upper section of the enclosure (10).

3. An enclosure (10) according to claim 1 or 2, **characterized in that** it has a generally parallelepiped shaped form and comprises lateral walls (12, 13) in which the gas injection opening (14) and the gas extraction opening (15) are provided.

4. An enclosure (10) according to any one of the preceding claims, **characterized in that** it comprises suction means associated with the extraction opening (15).

5. An enclosure (10) according to claim 4, **characterized in that** the suction means comprise an electric motorized suction blower (24).
